# EUROPÄISCHE PATENTANMELDUNG

(11) **EP 4 841 854 A1**
(43) Veröffentlichungstag der Anmeldung: **18.11.2026**
(21) Anmeldenummer: 25176257.1
(22) Anmeldetag: 14.05.2025
(51) Int. Cl.: H02J 7/00

(54) **AKKUMULATOR-LADEVERFAHREN**

(71) Anmelder: Hilti Aktiengesellschaft, 9494 Schaan (LI)
(72) Erfinder: Maletti, Sebastian, 86152 Augsburg (DE); Dippon, Michael, 9472 Grabs (CH)
(74) Vertreter: Hilti Aktiengesellschaft Corporate Intellectual Property

(57) **Zusammenfassung**

Die vorliegende Erfindung betrifft ein Verfahren zum Laden eines Akkumulators für eine mobile Werkzeugmaschine, welcher zumindest eine Zelle mit einer Ladeschlussspannung von mehr als 4,3 V hat, das Verfahren enthält eine Schleife, welche die folgenden Schritte enthält:
a) Laden mit einer bestimmten Stromstärke,
b) Überwachen zumindest einer Eigenschaft des Ladens, insbesondere einer Zellspannung, und
c) Reduzieren der bestimmten Stromstärke bei Erreichen eines vorgegebenen Werts der zumindest einen überwachten Eigenschaft, insbesondere bei Erreichen einer vorgegebenen Zellspannung,
wobei die zumindest eine überwachte Eigenschaft gewählt ist aus:
- einer elektrischen Aufladung der zumindest einen Zelle und/oder des Akkumulators,
- einer Temperatur und/oder einer Temperaturänderung der zumindest einen Zelle und/oder des Akkumulators,
- einer Dauer des Ladens und/oder eines aktuellen Schleifendurchlaufs, und
- der Zellspannung, wobei für den Fall des Überwachens der Zellspannung gilt, dass die bestimmte Stromstärke erstmals bei Erreichen der Zellspannung von zumindest 4,3 V reduziert wird.

## Beschreibung

### GEBIET DER ERFINDUNG

Die vorliegende Erfindung betrifft ein Verfahren zum Laden eines Akkumulators für eine mobile Werkzeugmaschine, wobei der Akkumulator eine Ladeschlussspannung je Zelle von mehr als 4,3 V hat. Außerdem betrifft die vorliegende Erfindung ein Computerprogrammprodukt, einen Akkumulator, welcher eine Ladeschlussspannung je Zelle von mehr als 4,3 V hat, ein Ladegerät zum Laden eines solchen Akkumulators, und eine Akkumulator-betriebene mobile Werkzeugmaschine.

Für Anwender mobiler Werkzeugmaschinen ist eine kurze Ladezeit häufig wichtig. Daher sollen Akkumulatoren schnellstmöglich geladen werden. Ein weiteres wichtiges Kriterium ist übrigens ein möglichst hoher Entladestrom, um mit der jeweiligen mobilen Werkzeugmaschine hohe Drehmomentspitzen zu erreichen.

Akkumulatoren sind Schaltungen, welche zumindest eine Akkumulatorzelle, kurz: Zelle, haben. Jede solche Zelle hat eine "Ladeschlussspannung", welche eine maximale an den Polen anliegende Spannung bei vollständiger elektrischer Aufladung der Zelle ist. Demgegenüber ist eine "Akkumulator-Nennspannung" gleich einem n-fachen der Zell-Nennspannung, falls der Akkumulator eine Reihenschaltung von n Zellen hat, und gleich der Zell-Nennspannung, falls der Akkumulator nur eine Zelle oder eine reine Parallelschaltung von Zellen hat.

Aktuelle Lithiumionen-Zellen haben Zell-Nennspannungen von 3,5 bis 3,8 V und Ladeschlussspannungen von 4 V bis 4,3 V. Ein Ladeverfahren für solche Zellen kann beispielsweise eine Schleife enthalten, welche die Schritte enthält: Laden des Akkumulators mit einer bestimmten Stromstärke, Überwachen einer Zellspannung, und Reduzieren der bestimmten Stromstärke bei Erreichen einer vorgegebenen Zellspannung, wobei die bestimmte Stromstärke bei Erreichen einer Zellspannung von deutlich unter 4 V erstmals reduziert wird. Es wird also in mehreren Stufen geladen, wobei die Stromstärke mit zunehmender Zellspannung reduziert wird.

Es sind aktuell Zelltypen in der Entwicklung, deren Ladeschlussspannungen 4,3 V bis 5 V oder sogar noch mehr beträgt. Das bisherige Ladeverfahren ist hierfür anwendbar, dauert aber zu lange.

Daher ist es die Aufgabe der Erfindung, ein Mittel zum schnellen Laden von Akkumulatoren mit einer Ladeschlussspannung je Zelle über 4,3 V bereitzustellen.

Demgemäß wird ein Verfahren zum Laden eines Akkumulators für eine mobile Werkzeugmaschine vorgeschlagen, wobei der Akkumulator zumindest eine Zelle mit einer Ladeschlussspannung von mehr als 4,3 V und insbesondere mehr als 5V hat. Das vorgeschlagene Verfahren enthält eine Schleife. Die Schleife enthält die Schritte a) Laden (des Akkumulators) mit einer bestimmten Stromstärke, b) Überwachen zumindest einer Eigenschaft des Ladens (des Akkumulators), und c) Reduzieren der bestimmten Stromstärke bei Erreichen eines vorgegebenen Werts der zumindest einen überwachten Eigenschaft. Die überwachte Eigenschaft ist gewählt aus:
- einer elektrischen Aufladung (sog. State-of-Charge) der zumindest einen Zelle und/oder des Akkumulators,
- einer Temperatur und/oder einer Temperaturänderung der zumindest einen Zelle und/oder des Akkumulators,
- einer Dauer des Ladens und/oder eines aktuellen Schleifendurchlaufs, und
- der Zellspannung, wobei für den Fall des Überwachens der Zellspannung gilt, dass die bestimmte Stromstärke bei Erreichen der Zellspannung von zumindest 4,3 V erstmals reduziert wird.

Da die bestimmte Stromstärke entsprechend der überwachten Eigenschaft (Zellaufladung, Akkumulatoraufladung, Zelltemperatur, Zelltemperaturänderung, Akkumulatortemperatur, Ackumulatortemperaturänderung, Ladedauer, Schleifendurchlaufdauer und/oder Zellspannung) reduziert wird, kann ein vorberechnetes optimiertes Schema umgesetzt werden, sodass eine möglichst kurze Dauer das gesamten Ladeverfahrens bis zum Erreichen einer bestimmten geladenen Energiemenge erreicht wird.

Spezieller formuliert wird ein Verfahren zum Laden eines Akkumulators für eine mobile Werkzeugmaschine vorgeschlagen, wobei der Akkumulator zumindest eine Zelle mit einer Ladeschlussspannung von mehr als 4,3 V und insbesondere mehr als 5 V hat. Das vorgeschlagene spezielle Verfahren enthält eine Schleife. Die Schleife enthält die Schritte a) Laden mit einer bestimmten Stromstärke, b) Überwachen einer Zellspannung, und c) Reduzieren der bestimmten Stromstärke bei Erreichen einer vorgegebenen Zellspannung. Dabei wird die bestimmte Stromstärke bei Erreichen einer Zellspannung von zumindest 4 V und insbesondere zumindest 4,3 V erstmals reduziert. Weil die bestimmte Stromstärke erstmals bei dieser hohen Zellspannung reduziert wird, kann die Zelle mit einer höheren durchschnittlichen Ladeleistung, welche sich aus Spannung und Stromstärke berechnet, geladen werden. Daher verkürzt dieses Ladeverfahren eine Ladezeit bis zum Erreichen einer bestimmten geladenen Energiemenge drastisch.

Unter einer "mobilen Werkzeugmaschine" kann man ein handgeführtes Elektrowerkzeug bzw. eine Handwerkzeugmaschine, beispielsweise eine Bohrmaschine, eine Schraubmaschine, eine Meißelmaschine, eine Schleifmaschine, eine Sägemaschine oder dergleichen verstehen. Denkbar ist auch, dass die mobile Werkzeugmaschine ein Bauroboter ist oder einen Bauroboter hat. Es kann sein, dass die mobile Werkzeugmaschine einen Manipulator, insbesondere einen mehrachsigen Manipulator, aufweist. Es kann sein, dass die mobile Werkzeugmaschine eine Antriebsvorrichtung zum Antrieb eines Werkzeugs, beispielsweise eines Bohrers, eines Meißels, eines Saugers oder dergleichen aufweist. Es kann sein, dass die mobile Werkzeugmaschine beispielsweise zur Bearbeitung von Stein, wie Beton, und/oder Metall und/oder Holz eingerichtet ist. Es kann sein, dass sie beispielsweise zum Bohren, Meißeln, Sägen und / oder Schleifen ausgebildet ist. Es kann allgemein sein, dass die mobile Werkzeugmaschine zur Ausführung von Arbeiten im Hoch- und/oder Tiefbau eingerichtet ist. Denkbar ist, dass sie nicht für einen Einsatz im Bergbau eingerichtet ist. Es kann sein, dass die mobile Werkzeugmaschine tragbar ist; sie kann beispielsweise ein Gewicht von weniger als 50 kg, insbesondere von weniger als 25 kg, aufweisen.

Unter einer "Schleife" ist eine Abfolge von Schritten zu verstehen. Die Abfolge wird zumindest einmal ausgeführt, aber vorzugsweise wird die Abfolge mehrmals nacheinander ausgeführt. Im vorliegenden Fall enthält die Abfolge der Schleife zumindest die Schritte Laden, Überwachen und Reduzieren. Es kann beispielsweise sein, dass die Schritte in der Reihenfolge Laden, Überwachen, Reduzieren, Laden, Überwachen, Reduzieren ... ausgeführt werden. Die Abfolge endet mit einem Überwachen, wenn dabei erkannt wird, dass die überwachte Eigenschaft, insbesondere die überwachte Zellspannung, einen vorbestimmten Wert erreicht hat. Es kann beispielsweise sein, dass das Überwachen der Eigenschaft (insb. der Zellspannung) während des Ladens mit der bestimmten Stromstärke ausgeführt wird. Es kann beispielsweise sein, dass das Laden in Intervallen ausgeführt wird, wobei zwischen je zwei Intervallen das Überwachen ausgeführt wird.

Es kann sein, dass die Schleife bis zum Erreichen eines vorgegebenen Werts der zumindest einen überwachten Eigenschaft, insbesondere bis zum Erreichen einer vorgegebenen Zellspannung wiederholt wird, und anschließend das Verfahren beendet wird. Mit anderen Worten wird vorgeschlagen, den Akkumulator rein Stromstärke-gesteuert zu laden. Man kann auch sagen, dass während des Ladens stets die Stromstärke vorgegeben wird, wenn auch in unterschiedlichen Stufen. Dieses Verfahren verspricht eine insgesamt kurze Ladezeit, weil stets eine vergleichsweise hohe Stromstärke vorgegeben wird.

Es kann sein, dass die Schleife bis zum Erreichen eines vorgegebenen Werts der zumindest einen überwachten Eigenschaft, insbesondere bis zum Erreichen einer vorgegebenen Zellspannung, wiederholt wird, anschließend die zumindest eine Zelle mit konstanter Ladespannung geladen wird, und anschließend das Verfahren beendet wird. Es wird also vorgeschlagen, in einer letzten Ladephase mit konstanter Spannung bzw. Spannungs-gesteuert zu laden. Dieses Verfahren kann eine besonders hohe Lebensdauer (d.h. besonders viele Ladezyklen) des aufzuladenden Akkumulators bewirken.

Es kann sein, dass das Verfahren enthält: Bereitstellen eines Satzes von Wertegruppen, insbesondere Wertepaaren, wobei jede Wertegruppe einen Stromstärkewert für die bestimmte Stromstärke und einen zugehörigen Wert der zumindest einen überwachten Eigenschaft des Ladens des Akkumulators beschreibt. Dieser Wer kann beispielsweise ein Spannungswert sein. Bei dem Spannungswert handelt es sich vorzugsweise um einen zugehörigen Spannungswert für die bei dieser bestimmten Stromstärke zu erreichende Zellspannung. Falls es sich um einen Satz Wertepaare aus je einem Stromstärkewert und einem zugehörigen Spannungswert handelt, gilt diesen Satz, dass der Stromstärkewert mit zunehmendem Spannungswert abnimmt. Man kann den bereitgestellten Satz als einen Konfigurationssatz beschreiben. Die Stromstärkewerte und die zugehörigen Werte der zu überwachenden Eigenschaft(en) werden somit zu einem Parametersatz, den man an Akkumulatortypen anpassen kann.

Denkbar ist beispielsweise ein Ladesystem, das zumindest einen Akkumulator und ein Ladegerät hat. Es kann sein, dass der Akkumulator den Satz von Wertegruppen in einem auslesbaren Speicher hat. Es kann sein, dass der jeweilige Satz von Wertegruppen durch Auslesen aus dem Speicher bereitgestellt wird, beispielsweise durch ein Ladegerät. Somit kann das Laden an den jeweiligen Akkumulator individuell angepasst ausführt werden.

Es kann sein, dass die bestimmte Stromstärke bis zum Erreichen der Zellspannung von 4,3V zumindest einer Laderate von 3C oder höher, insbesondere zumindest 3,5C und vorzugsweise zumindest 4C entspricht. Unter dem Begriff der Laderate versteht man eine an einen Akkumulator und/oder an eine Zelle abgegebene Ladung je Stunde normiert auf eine jeweilige Kapazität dieses Akkumulators bzw. dieser Zeit. Beispielsweise bedeutet eine Laderate von 1C, dass eine (vorzugsweise gemittelte) Stromstärke zum Laden eines gegebenen Akkumulators in einer Stunde ausreicht. Dementsprechend bedeutet eine Laderate von 2C, dass die (vorzugsweise gemittelte) Stromstärke zum Laden zweier Akkumulatoren eines gegeben Typs in einer Stunde ausreicht. Eine höhere Laderate bedeutet, dass mehr Akkumulatoren eines gegebenen Typs in einer Stunde geladen werden können.

Es kann sein, dass die bestimmte Stromstärke bis zum Erreichen der Zellspannung von 4,3V zumindest einer Laderate von 3C oder höher entspricht. Dieser Wertebereich der bestimmten Stromstärke ermöglicht ein vergleichsweise schnelles Laden.

Es kann sein, dass die zumindest eine Zelle eine Lithiumionenzelle ist, wobei ein Kathodenmaterial vorzugsweise Lithiumoxid, Manganoxid, Nickeloxid, Lithiumphosphat, Manganphosphat und/oder Eisenphosphat enthält. Das Kathodenmaterial ist vorzugsweise ein Mischoxid enthaltend Lithium, Mangan und/oder Nickel. Besonderes bevorzugt ist das Kathodenmaterial ein Lithium-Mangan-Nickel-Mischoxid. Dass das Kathodenmaterial ein solches Material ist, kann beispielsweise bedeuten, dass das Kathodenmaterial zumindest größtenteils aus diesem Material besteht und/oder dass eine Kathodenwirkung durch dieses Material dominiert wird. Diese Materialien sind bevorzugt, weil sie hohe Ladeschlussspannungen versprechen.

Es kann sein, dass die zumindest eine Zelle eine Nennladung von 4 bis 7 Ah hat. Es kann sein, dass der Akkumulator Zellen des Zellformats 21700 hat. Es kann sein, dass die zumindest eine Zelle eine Nennladung von 2,5 bis 5 Ah hat. Es kann sein, dass der Akkumulator Zellen des Zellformats 18650 hat. Die genannten Nennladungen und Zellformate sind für den Betrieb mobiler Werkzeugmaschinen besonders geeignet, beispielsweise um hohe Entladeströme zum Erzeugen von Spitzendrehmomenten bereitstellen zu können. Es kann sein, dass der Akkumulator zumindest eine sogenannte Pouch-Zelle hat bzw. dass die Zelle eine Pouch-Zelle ist. Unter einer Pouch-Zelle ist eine flexible Bauform zu verstehen, wobei beispielsweise eine biegsame Folie einen Stapel biegsamer aktiver Schichten umschließt. Die Pouch-Zelle kann beispielsweise eine sehr flache Bauform haben, die ein langsameres Erhitzen (als bspw. eine zylindrische Zelle) bei hohen Ladestromstärken zur Folge hat.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen. Da das Computerprogrammprodukt die Merkmale des vorstehenden Verfahrens hat, erreicht es auch dessen Vorteile. Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Als ein weiterer Aspekt der Erfindung wird ein Akkumulator für eine mobile Werkzeugmaschine vorgeschlagen. Der Akkumulator hat zumindest eine Zelle mit einer Ladeschlussspannung von mehr als 4,3 V. Außerdem hat der Akkumulator ein Steuergerät, das zum Ausführen des oben beschriebenen Ladeverfahrens eingerichtet ist. Mit anderen Worten wird ein Akkumulator vorgeschlagen, der zum Steuern einer Stromstärke und/oder einer Spannung eines Ladestroms zum Laden der Zelle/-n dieses Akkumulators eingerichtet ist. Die für das vorgeschlagene Verfahren beschriebenen Ausführungsformen und Vorteile gelten für den vorgeschlagenen Akkumulator entsprechend und umgekehrt.

Beispielsweise hat der Akkumulator eine Schnittstelle zum mechanischen und elektrischen Koppeln des Akkumulators an ein Ladegerät und/oder eine mobile Werkzeugmaschine, wobei vorzugsweise das Steuergerät mit der Schnittstelle und der zumindest einen Zelle zum Steuern eines Ladens der zumindest einen Zelle verschaltet ist.

Der Akkumulator hat vorzugsweise einen Speicher. Der Speicher ist vorzugsweise in das Steuergerät integriert. Der Speicher ist eingerichtet, um einen Satz Wertegruppen, insbesondere Wertepaare, zu speichern, wobei jede Wertegruppe einen Stromstärkewert für die bestimmte Stromstärke und einen zugehörigen Wert der zumindest einen zu überwachenden Eigenschaft eines Ladens des Akkumulators beschreibt. Dieser Wer kann vorzugsweise ein zugehöriger Spannungswert für die bei dieser bestimmten Stromstärke zu erreichende Zellspannung beschreiben, wobei für den Satz gilt, dass der Stromstärkewert mit zunehmendem Spannungswert abnimmt.

Das Steuergerät ist vorzugsweise dazu eingerichtet, eine Stromstärke und/oder eine elektrische Leistung entsprechend dem vorstehend beschriebenen Verfahren von einem Ladegerät und/oder einer zum Aufladen eingerichteten mobilen Werkzeugmaschine anzufordern. Man kann auch von einem Abrufen der elektrischen Leistung sprechen.

Als ein weiterer Aspekt der Erfindung wird ein Akkumulator für eine mobile Werkzeugmaschine vorgeschlagen. Der Akkumulator hat zumindest eine Zelle mit einer Ladeschlussspannung von mehr als 4,3 V. Außerdem hat der Akkumulator einen Speicher, der durch ein Ladegerät und/oder eine Werkzeugmaschine auslesbar ist. Der Speicher ist eingerichtet, um einen Satz Wertegruppen, insbesondere Wertepaare, zu speichern, wobei jede Wertegruppen einen Stromstärkewert für die bestimmte Stromstärke und einen zugehörigen Wert zumindest einer zu überwachenden Eigenschaft eines Ladens des Akkumulators beschreibt. Dieser Wert kann vorzugsweise einen zugehörigen Spannungswert für die bei dieser bestimmten Stromstärke zu erreichende Zellspannung beschreiben, wobei für den Satz gilt, dass der Stromstärkewert mit zunehmendem Spannungswert abnimmt. Die für das vorgeschlagene Verfahren oder den voranstehend beschriebenen vorgeschlagenen Akkumulator beschriebenen Ausführungsformen und Vorteile gelten für diesen vorgeschlagenen Akkumulator entsprechend, und umgekehrt.

Als ein weiterer Aspekt der Erfindung wird ein Ladegerät zum Laden eines Akkumulators für eine mobile Werkzeugmaschine vorgeschlagen, wobei der Akkumulator zumindest eine Zelle mit einer Ladeschlussspannung von mehr als 4,3 V hat. Das Ladegerät hat eine Ladeschnittstelle und ein Steuergerät, das zum Ausführen des oben beschriebenen Verfahrens eingerichtet ist. Die für das vorgeschlagene Verfahren und/oder für einen vorgeschlagenen Akkumulator beschriebenen Ausführungsformen und Vorteile gelten für das vorgeschlagene Ladegerät entsprechend und umgekehrt.

Das Steuergerät des Ladegeräts ist vorzugsweise dazu eingerichtet, eine Stromstärke bereitzustellen, welche durch ein Steuergerät eines Akkumulators gemäß dem oben beschriebenen Verfahren angefordert wird.

Das Ladegerät ist vorzugsweise dazu eingerichtet, einen Satz Wertegruppen, insbesondere Wertepaare, durch Auslesen aus einem Speicher des Akkumulators bereitzustellen, wobei jede Wertegruppe einen Stromstärkewert für die bestimmte Stromstärke und einen zugehörigen Wert zumindest einer zu überwachenden Eigenschaft eines Ladens des Akkumulators beschreibt. Dieser Wer kann vorzugsweise einen zugehörigen Spannungswert für die bei dieser bestimmten Stromstärke zu erreichende Zellspannung beschreiben, wobei für den Satz gilt, dass der Stromstärkewert mit zunehmendem Spannungswert abnimmt. Dies ermöglicht es, den Satz Wertegruppen / Wertepaare als einen Parameter zu behandeln, der an einzelne Akkumulatortypen anpassbar ist.

Als noch ein weiterer Aspekt der Erfindung wird eine Akkumulator-betriebene mobile Werkzeugmaschine vorgeschlagen. Die Werkzeugmaschine hat einen Akkumulator und/oder eine Schnittstelle zum Koppeln eines Akkumulators, wobei der Akkumulator zumindest eine Zelle mit einer Ladeschlussspannung von mehr als 4,3 V hat. Die Werkzeugmaschine hat außerdem ein Steuergerät, das zum Ausführen des oben beschriebenen Verfahrens eingerichtet ist. Die für das vorgeschlagene Verfahren, einen vorgeschlagenen Akkumulator und/oder das vorgeschlagene Ladegerät beschriebenen Ausführungsformen und Vorteile gelten für die vorgeschlagene Werkzeugmaschine entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: ein Ablaufdiagramm eines Verfahrens zum Laden eines Akkumulators für eine mobile Werkzeugmaschine gemäß einer ersten Ausführungsform der Erfindung;
- Fig. 2: ein Diagramm zum Darstellen eines Stromstärkeverlaufs und eines zugehörigen Spannungsverlaufs über der Zeit während einer beispielhaften Ausführung des in Fig. 1 dargestellten Verfahrens;
- Fig. 3: ein Ladegerät gemäß einer zweiten Ausführungsform der Erfindung zum Laden eines Akkumulators, das mit einem Akkumulator gekoppelt und zum Ausführen des in Fig. 1 dargestellten Verfahrens eingerichtet ist;
- Fig. 4: einen Akkumulator gemäß einer dritten Ausführungsform für eine mobile Werkzeugmaschine, der zum Ausführen des in Fig. 1 dargestellten Verfahrens eingerichtet ist; und
- Fig. 5: eine mobile Werkzeugmaschine gemäß einer vierten Ausführungsform der Erfindung, der einen Akkumulator hat und zum Ausführen des in Fig. 1 dargestellten Verfahrens eingerichtet ist.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

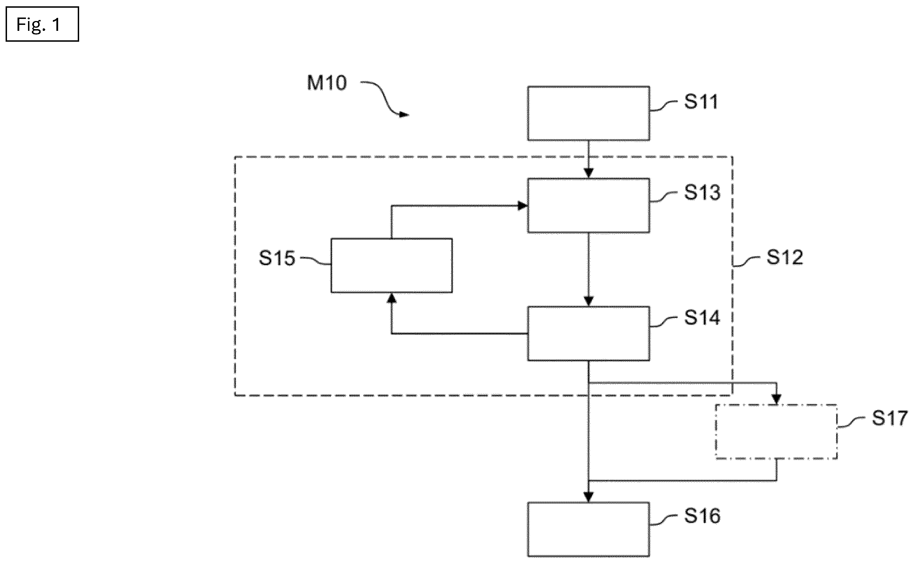

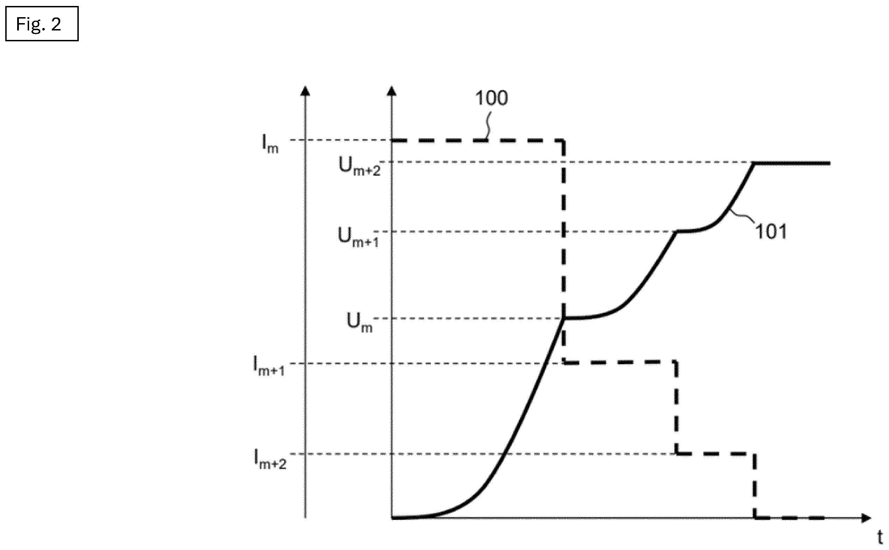

Zunächst wird anhand der Fig. 1 und 2 ein beispielhafter Ablauf eines vorgeschlagenen Verfahrens M10 zum Laden eines Akkumulators 201, 300, 412 für eine mobile Werkzeugmaschine 400 beschrieben.

In einem ersten Schritt S11 wird ein Satz von Wertegruppen, insbesondere Wertepaare, bereitgestellt. Jede Wertegruppe hat einen Stromstärkewert I und jeweils einen Wert zumindest einer zu überwachenden Eigenschaft eines Ladens des Akkumulators 201, 300, 412, beispielsweise:
- einen Wert einer elektrischen Aufladung des Akkumulators 201, 300, 412,
- einen Wert einer elektrischen Aufladung einer Zelle 207, 302, 416 des Akkumulators 201, 300, 412,
- einen Wert einer Temperatur des Akkumulators 201, 300, 412,
- einen Wert einer Temperaturänderung des Akkumulators 201, 300, 412,
- einen Wert einer Temperatur der zumindest einen Zelle 207, 302, 416 des Akkumulators 201, 300, 412,
- einen Wert einer Temperaturänderung der zumindest einen Zelle 207, 302, 416 des Akkumulators 201, 300, 412,
- einen Werte einer Dauer des Ladens des Akkumulators 201, 300, 412,
- einen Wert einer Dauer eines Schleifendurchlaufs des Ladens des Akkumulators 201, 300, 412 und/oder
- einen Spannungswert einer Zellspannung U.

Der Einfachheit halber wird im Folgenden von einem Satz Wertepaare, enthaltend je einen Stromstärkewert I und einen Spannungswert U ausgegangen. Beispielsweise sind dies drei Wertepaare Iₘ / Uₘ , Iₘ₊₁ / Uₘ₊₁ und Iₘ₊₂ / Uₘ₊₂. Dabei steht ein Index "m" für einen Schleifendurchlauf und soll verdeutlichen, dass das Verfahren nicht auf drei Wertepaare bzw. drei Schleifendurchläufe beschränkt ist. Mit steigendem Index "m" nehmen der Wert der Stromstärke ab und der Wert der jeweils zu erreichenden Spannung zu. Beispielsweise betragen die Wertepaare 12 A bis zu 4,3V, 6 A bis zu 4,7 V und 3 A bis zu 5 V. Beispielsweise betragen die Wertepaare: bis zu 4,3V eine Stromstärke entsprechend einer Laderate von 3C, darüber bis zu 4,7V eine Stromstärke entsprechend einer Laderate von 1,5C und darüber bis zu 5V eine Stromstärke entsprechend einer Laderate von 0,75C. Es kann auch sein, dass die Wertepaare einen Spannungswert für eine Reihenschaltung von Zellen enthält.

Als nächstes folgt eine Schleife S12, welche mehrere Schritte S13 bis S15 enthält und wenigstens einmal durchlaufen wird.

In dem Schritt S13 wird der Akkumulator 201, 300, 412 mit einer bestimmten Stromstärke I geladen. Die bestimmte Stromstärke I ergibt sich beispielsweise aus dem bereitgestellten Satz von Wertepaaren bzw. Wertegruppen.

Während der Akkumulator 201, 300, 412 geladen wird, wird in einem gleichzeitig ausgeführten und/oder intervall-artig abwechselnd ausgeführten Schritt S14 eine Zellspannung U des Akkumulators 201, 300, 412 überwacht. Die Zellspannung U ergibt sich beispielsweise aus einem Quotienten einer an Anschlüssen des Akkumulators 201, 300, 412 anliegenden Spannung Uᵢₛₜ und einer Anzahl n in Reihe geschalteter Zellen des Akkumulators 201, 300, 412. Wenn an den Anschlüssen beispielsweise eine Spannung von 6 V anliegt und 3 Zellen in Reihe geschaltet sind, beträgt die Zellspannung U demgemäß 6/3 = 2 V.

Erreicht die überwachte Zellspannung U einen vorgegebenen Schwellwert, wird der Schritt S15 ausgelöst. Der bei einer bestimmten Stromstärke I zu erreichende Schwellwert der Zellspannung U ist der jeweilige Spannungswert des mittels des Satzes bereitgestellten Wertepaars. Beispielsweise ist bei der Ladestromstärke I entsprechend einer Laderate von 3C die Zellspannung von 4,3V oder mehr zu erreichen. Es kann sein, dass der erstmals (d.h. bei der ersten Stromstärkestufe während eines Ladevorgangs) zu erreichende Spannungswert U größer als 4,3 V ist.

Die Schleife S12 wird vorzugsweise mehrmals durchlaufen. Die Fig. 2 illustriert dies in einem überlagerten Diagramm. Durch die vorgegebenen Stromstärke-Spannungs-Wertepaare ergibt sich ein abgestufter Verlauf 100 der Ladestromstärke I. Allgemein gesagt ergibt der Satz Wertegruppen eine abgestufte Kennkurve oder ein abgestuftes Kennfeld. Ein resultierender Verlauf 101 der Zellspannung U zeigt ein inverses Sättigungsverhalten.

Wenn die Zellspannung U einen vorgegebenen Wert (den höchsten Spannungswert der in diesem Beispiel bereitgestellten Wertepaare) erreicht, wird die Schleife S12 verlassen. Es folgt ein Schritt S16, in welchem das das Verfahren beendet wird. Beispielsweise wird ein Ladezustandsindikator von einem ein Laden anzeigendes Signal auf ein einen Abschluss des Ladens anzeigendes Signal umgeschaltet. Beispielsweise wird ein LED von einem Strichsignal auf ein Blinksignal umgeschaltet.

Es kann auch sein, dass zwischen der Schleife S12 und dem Abschluss S16 ein Schritt S17 vorkommt. In diesem Schritt wird der Akkumulator 201, 300, 412 beispielsweise mit einem vorgegebenen Spannungswert fertig geladen. Man kann von einem Spannungs-gesteuerten Laden sprechen, was hierbei bedeutet, dass die Stromstärke I angepasst wird, um die vorgegebene Spannung U, bspw. 5,5 V, zu erreichen.

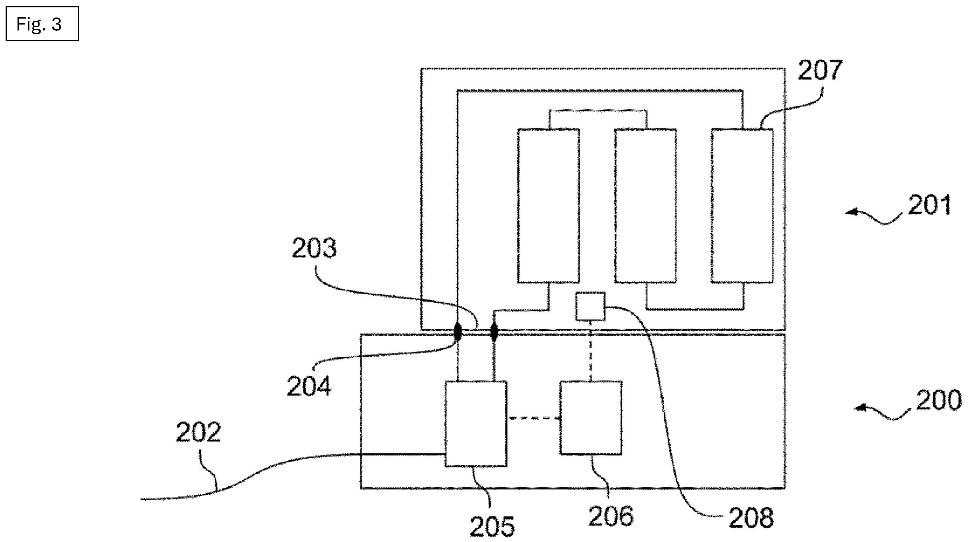

Als nächstes wird anhand der Fig. 3 ein Ladegerät 200 einer zweiten Ausführungsform der Erfindung vorgestellt. Das Ladegerät 200 ist zum Laden eines Akkumulators 201 für eine mobile Werkzeugmaschine eingerichtet. Das Ladegerät 200 hat ein Netzkabel 202. Außerdem hat das Ladegerät 200 eine Ladeschnittstelle 203 zum zumindest elektrischen Koppeln eines Akkumulators 201 an das Ladegerät 200. Das Netzkabel 202 und Kontakte 204 der Ladeschnittstelle 203 sind über eine Versorgungsschaltung 205 miteinander verschaltet. Die Versorgungsschaltung 205 ist beispielsweise zum Wandeln eines Wechselstroms in einen Gleichstrom und/oder zum Transformieren einer Netzspannung in eine Ladespannung eingerichtet. Ein Steuergerät 206 steuert bzw. rückmeldungssteuert (regelt) die Versorgungsschaltung 205. Es kann auch sein, dass das Steuergerät 206 die Funktion der Versorgungsschaltung 205 wahrnimmt, sodass möglicherweise keine separate Versorgungsschaltung vorhanden ist.

Der Akkumulator 201 hat in diesem Beispiel drei Zellen 207, welche in Reihe geschaltet sind. Alle drei Zellen 207 sind vom selben Typ bzw. Format. Beispielsweise sind dies Lithiumionen-Zellen, deren Kathodenmaterial Lithium-Nickel-Manganoxid ist. Der Akkumulator 201 hat beispielsweise eine Zell-Ladeschlussspannung von 5 V bzw. eine Akkumulator-Ladeschlussspannung von 15 V. Der Akkumulator 201 ist komplementär zu der Ladeschnittstelle 203.

Der Akkumulator 201 hat einen Speicher 208. Der Speicher 208 ist durch das Steuergerät 206 des Ladegeräts 200 auslesbar. Der Speicher 208 speichert einen Satz Wertepaare oder Wertegruppen, wie oben beschrieben.

Das Steuergerät 206 ist dazu eingerichtet, das oben beschriebene Verfahren M10 zum Laden eines Akkumulators 201 für eine mobile Werkezugmaschine auszuführen. Daher kann das Ladegerät 200 den Akkumulator 201 so laden, dass sich der in Fig. 2 angedeutete Stromstärke- und Spannungsverlauf ergibt. Im Ergebnis kann der Akkumulator 201 besonders schnell aufgeladen werden. Im Übrigen wird auf die obige Beschreibung verwiesen.

In einer nicht dargestellten Variante ist das Ladegerät zum Laden eines Akkumulators eingerichtet, wobei der Akkumulator fest in eine mobile Werkzeugmaschine verbaut ist (d.h. er kann nicht werkzeuglos von der Werkzeugmaschine getrennt werden). Man kann in diesem Fall von einem Ladegerät zum Laden einer mobilen Werkzeugmaschine sprechen.

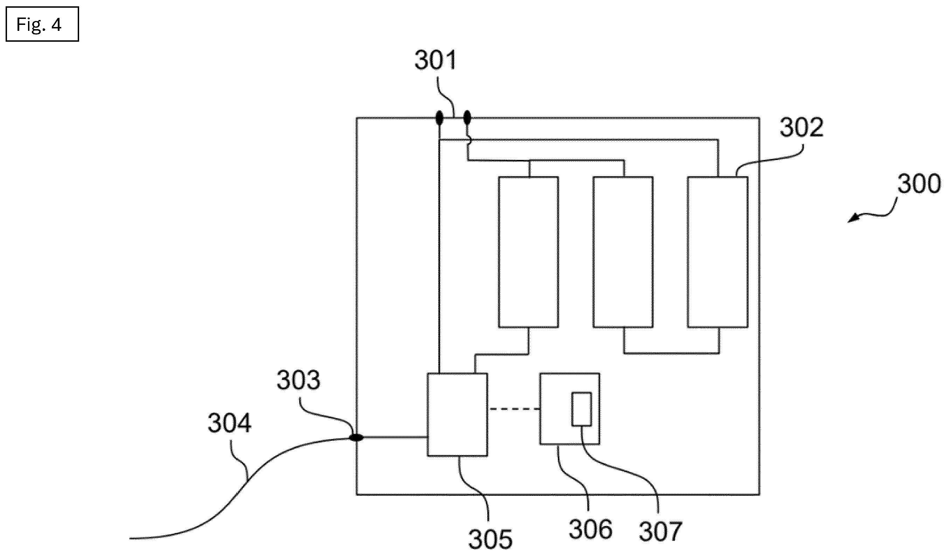

Als nächstes wird anhand der Fig. 4 ein Akkumulator 300 einer dritten Ausführungsform der Erfindung vorgestellt. Der Akkumulator 300 ist zum Versorgen einer mobilen Werkzeugmaschine mit elektrischer Energie eingerichtet und hat dazu eine Schnittstelle 301. Der Akkumulator 300 hat mehrere Zellen 302, bspw. drei in Reihe geschaltete Zellen 302. Der Akkumulator 300 hat weiters eine Netzschnittstelle 303, in die ein Netzkabel 304 einsteckbar ist. Die Netzschnittstelle 303 ist über eine Versorgungsschaltung 305 mit den Zellen 302 verschaltet. Ein Steuergerät 306 steuert bzw. rückmeldungssteuert (regelt) die Versorgungsschaltung 305. Das Steuergerät 306 hat einen Speicher 307, der den oben beschrieben Satz von Wertepaaren bzw. Wertegruppen speichert. Das Steuergerät 306 ist dazu eingerichtet, das oben beschriebene Verfahren M10 zum Laden eines Akkumulators 300 für eine mobile Werkzeugmaschine auszuführen. Der Akkumulator 300 ist vorzugsweise auch durch ein Ladegerät (nicht gezeigt) mittels der Schnittstelle 301 aufladbar. Es kann auch sein, dass der Akkumulator 300 nicht die Netzschnittstelle 303 hat und nur Steuern bzw. Rückmeldungssteuern eines Ladens mittels der Schnittstelle 301 eingerichtet ist. Im Übrigen wird auf die obige Beschreibung verwiesen.

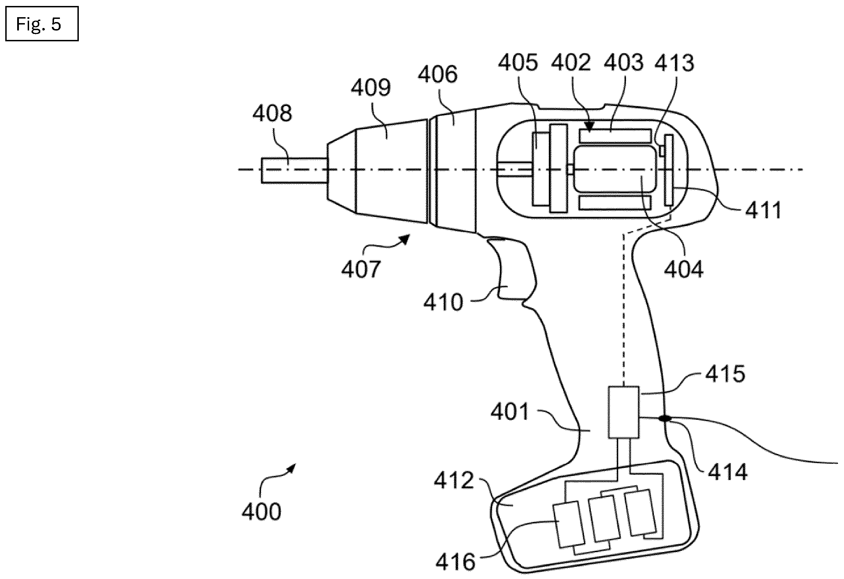

Die Fig. 5 zeigt eine mobile Werkzeugmaschine 400 einer vierten Ausführungsform der Erfindung. Die Werkzeugmaschine 400 ist beispielhaft eine Handwerkzeugmaschine, genauer gesagt eine Bohrmaschine. Weitere bevorzugte Ausführungsformen umfassen eine Meißelmaschine, eine Schleifmaschine oder eine Sägemaschine. Die Werkzeugmaschine 400 hat ein Gehäuse 401 zum Schützen und Lagern weiterer Bauteile. Die Werkzeugmaschine 400 ist als tragbares Gerät ausgebildet. Sie weist beispielsweise ein Gewicht zwischen 0,5 und 15 kg und allgemein von weniger als 25 kg oder 50 kg auf.

Die Werkzugmaschine 400 hat einen Elektromotor 402, der einen Stator 403 und einen Rotor 404 hat. Der Rotor 404 ist beispielsweise über ein Getriebe 405 mit einer Spindel 406 einer Werkezugaufnahme 407 rotationsgekoppelt. Das Getriebe 405 ist beispielsweise ein Untersetzungsgetriebe. Es kann sein, dass das Getriebe 405 zwischen mehreren Übersetzungen schaltbar ist. Es kann sein, dass die Werkzeugmaschine 400 ein Schlagwerk enthält, das als Teil des Getriebes 405 oder der Werkzeugaufnahme 407 ausgeführt und/oder zwischen das Getriebe 405 und die Werkzeugaufnahme 407 geschaltet ist.

Die Werkzeugaufnahme 407 ist vorzugsweise zur Aufnahme eines wechselbaren Werkzeugs 408 konfiguriert. Beispielsweise kann durch ein Verdrehen eines Griffs 409 der Werkzeugaufnahme 407 gegenüber der Spindel 406 ein (nicht dargestelltes) Futter der Werkzeugaufnahme 407 geöffnet und/oder geschlossen werden. Beispielsweise handelt es sich um ein Schnellspannbohrfutter, ein SDS-Bohrfutter und/oder ein TE-C-Borfutter. Mittels der Werkzeugaufnahme 407 ist das Werkzeug 408 beispielsweise rotierend und/oder schlagend und/oder hämmernd antreibbar.

Der Elektromotor 402 ist beispielsweise ein bürstenloser Gleichstrommotor. Der Elektromotor 402 ist zum Erzeugen eines Drehmoments zwischen dem Stator 403 und dem Rotor 404 betreibbar. Ein Steuergerät 411 ist dazu konfiguriert, auf eine Betätigung eines Betätigungselements 410 hin einen elektrischen Stromfluss von einem Akkumulator 412 zu dem Stator 403 zu schalten.

Beispielsweise ist das Steuergerät 411 dazu eingerichtet, eine Rotationslage (Rotationswinkel und/oder Winkelgeschwindigkeit) des Rotors 404 relativ zu dem Gehäuse 401 mittels einer Hallsensorschaltung 413 zu erfassen. Beispielsweise ist das Steuergerät 411 weiterhin dazu eingerichtet, (in Fig. 1 nicht dargestellte) Wicklungen des Stators 403 mit elektrischem Strom zu beaufschlagen. Das Steuergerät 411 hat dazu beispielsweise eine Auswertelogik, und sie kann beispielsweise zum Ausführen eines Computerprogramms eingerichtet sein, dessen Befehle das Steuergerät 411 dazu bringen, ein Verfahren zum Betreiben der mobilen Werkzeugmaschine 100 auszuführen.

Die Werkzeugmaschine 400 hat außerdem einen trennbaren Netzanschluss 414 zum Laden des Akkumulators 412. Dazu ist der Netzanschluss 414 mit dem Akkumulator 412 über eine Versorgungsschaltung 415 verbunden, welche durch das Steuergerät 411 gesteuert bzw. rückmeldungsgesteuert (geregelt) wird. Steuergerät 411 speichert den oben beschriebenen Satz Wertepaare bzw. Satz Wertegruppen. Es kann auch sein, dass ein Speicher (nicht gezeigt) des Akkumulators 412 den oben beschriebenen Satz Wertepaare bzw. Wertegruppen speichert, und das Steuergerät 411 diesen ausliest. Das Steuergerät 411 ist dazu eingerichtet, das oben beschriebene Verfahren M10 zum Laden des Akkumulators 412 auszuführen.

Der Akkumulator 412 hat beispielsweise eine Reihenschaltung mehrerer Zellen 416. Es kann sein, dass der Akkumulator 412 fest in die Werkzeugmaschine 400 eingebaut ist. Es kann sein, dass der Akkumulator 412 mit der Werkzeugmaschine 400 koppelbar ist, sodass kein separates Ladegerät mitgeführt werden muss. Im Übrigen wird auf die obige Beschreibung verwiesen.

Die beschriebenen Ausführungsformen beschreiben aus Illustrationsgründen eine Ausführung auch optionaler Merkmale. Obwohl die vorliegende Erfindung anhand von Ausführungsbeispielen beschrieben wurde, ist sie vielfältig modifizierbar.

### BEZUGSZEICHENLISTE

- 100: abgestufter Verlauf eine Ladestromstärke
- 101: abgestufter Verlauf einer Zellspannung
- 200: Ladegerät
- 201: Akkumulator
- 202: Netzkabel
- 203: Ladeschnittstelle
- 204: Kontakte der Ladeschnittstelle
- 205: Versorgungsschaltung
- 206: Steuergerät
- 207: Zelle
- 208: Speicher
- 300: Akkumulator
- 301: Schnittstelle zum Versorgen einer mobilen Werkzeugmaschine
- 302: Zelle
- 303: Netzschnittstelle
- 304: Netzkabel
- 305: Versorgungsschaltung
- 306: Steuergerät
- 307: Speicher
- 400: mobile Werkzeugmaschine
- 401: Gehäuse
- 402: Elektromotor
- 403: Stator
- 404: Rotor
- 405: Getriebe
- 406: Spindel
- 407: Werkzeugaufnahme
- 408: Werkzeug
- 409: Griff
- 410: Betätigungselement
- 411: Steuergerät
- 412: Akkumulator
- 413: Hallsensorschaltung
- 414: Netzanschluss
- 415: Versorgungsschaltung
- 416: Zelle
- M10: Verfahren zum Laden eines Akkumulators für eine mobile Werkzeugmaschine
- S11: Bereitstellen eines Satzes von Wertepaaren bzw. Satzes von Wertegruppen
- S12: Schleife
- S13: Laden mit einer bestimmten Stromstärke
- S14: Überwachen einer Zellspannung
- S15: Reduzieren der bestimmten Stromstärke
- S16: Beenden des Verfahrens
- S17: Laden mit einer konstanten Spannung

## Patentansprüche

1. Verfahren (M10) zum Laden eines Akkumulators (201, 300, 412) für eine mobile Werkzeugmaschine (400), welcher zumindest eine Zelle (207, 302, 416) mit einer Ladeschlussspannung von mehr als 4,3 V hat, das Verfahren (M10) enthält eine Schleife (S12), welche die folgenden Schritte enthält:
a) Laden (S13) mit einer bestimmten Stromstärke (Im, Im+1, Im+2),
b) Überwachen (S14) zumindest einer Eigenschaft des Ladens, insbesondere einer Zellspannung (U), und
c) Reduzieren (S15) der bestimmten Stromstärke (Im, Im+1, Im+2) bei Erreichen eines vorgegebenen Werts der zumindest einen überwachten Eigenschaft, insbesondere bei Erreichen einer vorgegebenen Zellspannung (Um, Um+1, Um+2),
**dadurch gekennzeichnet, dass**
die zumindest eine überwachte Eigenschaft gewählt ist aus:
- einer elektrischen Aufladung der zumindest einen Zelle (207, 302, 416) und/oder des Akkumulators (201, 300, 412),
- einer Temperatur und/oder einer Temperaturänderung der zumindest einen Zelle (207, 302, 416) und/oder des Akkumulators (201, 300, 412),
- einer Dauer des Ladens und/oder eines aktuellen Schleifendurchlaufs, und
- der Zellspannung (U), wobei für den Fall des Überwachens der Zellspannung (U) gilt, dass die bestimmte Stromstärke (Iₘ) erstmals bei Erreichen der Zellspannung (U) von zumindest 4,3 V reduziert wird.

2. Verfahren (M10) nach Anspruch 1, wobei die Schleife (S12) bis zum Erreichen eines vorgegebenen Werts der zumindest einen überwachten Eigenschaft, insbesondere bis zum Erreichen einer vorgegebenen Zellspannung (Uₘ₊₂), wiederholt wird, und anschließend das Verfahren (M10) beendet (S15) wird.

3. Verfahren (M10) nach Anspruch 1, wobei die Schleife (S12) bis zum Erreichen eines vorgegebenen Werts der zumindest einen überwachten Eigenschaft, insbesondere bis zum Erreichen einer vorgegebenen Zellspannung (Uₘ₊₂), wiederholt wird, anschließend die zumindest eine Zelle (207, 302, 416) mit konstanter Ladespannung (U) geladen (S16) wird, und anschließend das Verfahren (M10) beendet (S15) wird.

4. Verfahren (M10) nach einem der vorigen Ansprüche, enthaltend: Bereitstellen (S11) eines Satzes von Wertegruppen, insbesondere Wertepaaren, wobei jede Wertegruppe einen Stromstärkewert für die bestimmte Stromstärke (Iₘ, Iₘ₊₁, Iₘ₊₂) und einen zugehörigen Wert der zumindest einen überwachten Eigenschaft des Ladens des Akkumulators (201, 300, 412) beschreibt, wobei vorzugsweise der Wert der überwachten Eigenschaft einen Spannungswert für die bei dieser bestimmten Stromstärke (Iₘ, Iₘ₊₁, Iₘ₊₂) zu erreichende Zellspannung (Uₘ, Uₘ₊₁, Uₘ₊₂) beschreibt und für den Satz gilt, dass der Stromstärkewert mit zunehmendem Spannungswert abnimmt.

5. Verfahren (M10) nach Anspruch 4, wobei der Satz von Wertegruppen durch Auslesen aus einem Speicher (208, 307) des Akkumulators (201, 300) bereitstellt wird.

6. Verfahren (M10) nach einem der vorigen Ansprüche, wobei bis zum Erreichen der Zellspannung (Uₘ) von zumindest 4,3V die bestimmte Stromstärke (Iₘ) zumindest einer Laderate von 3C oder höher entspricht.

7. Verfahren (M10) nach einem der vorigen Ansprüche, wobei die zumindest eine Zelle (207, 302, 416) eine Lithiumionenzelle ist, und wobei ein Kathodenmaterial ein Lithium-Mangan-Nickel-Mischoxid ist.

8. Verfahren (M10) nach einem der Ansprüche 1-6, wobei die zumindest eine Zelle (207, 302, 416) eine Nennladung von 4 bis 7 Ah hat und/oder das Zellformat 21700 ist, und/oder wobei die zumindest eine Zelle (207, 302, 416) eine Nennladung von 2,5 bis 5 Ah hat und/oder das Zellformat 18650 ist, und/oder wobei die Zelle (207, 302, 416) eine Pouch-Zelle ist.

9. Computerprogrammprodukt, welches Befehle umfasst, die bei der Ausführung des Programms durch einen Computer diesen veranlassen, das Verfahren (M10) nach einem der vorigen Ansprüche auszuführen.

10. Akkumulator (300) für eine mobile Werkzeugmaschine, welcher zumindest eine Zelle (302) mit einer Ladeschlussspannung von mehr als 4,3 V hat, und welcher ein Steuergerät (306) hat, das zum Ausführen des Verfahrens (M10) nach einem der Ansprüche 1-8 eingerichtet ist.

11. Akkumulator (300) nach Anspruch 10, welcher einen Speicher (307) hat, der eingerichtet ist, um einen Satz Wertegruppen, insbesondere Wertepaare, zu speichern, wobei jede Wertegruppe einen Stromstärkewert für die bestimmte Stromstärke (Iₘ, Iₘ₊₁, Iₘ₊₂) und einen zugehörigen Wert der zumindest einen zu überwachenden Eigenschaft eines Ladens des Akkumulators (300) beschreibt, wobei vorzugsweise der Wert der zu überwachenden Eigenschaft einen Spannungswert für die bei dieser bestimmten Stromstärke (Iₘ, Iₘ₊₁, Iₘ₊₂) zu erreichende Zellspannung (Uₘ, Uₘ₊₁, Uₘ₊₂) beschreibt und für den Satz gilt, dass der Stromstärkewert mit zunehmendem Spannungswert abnimmt.

12. Akkumulator (201) für eine mobile Werkzeugmaschine, welcher zumindest eine Zelle (207) mit einer Ladeschlussspannung von mehr als 4,3 V hat, und welcher einen Speicher (208) hat, der durch ein Ladegerät (200) und/oder eine Werkzeugmaschine auslesbar ist, und welcher eingerichtet ist, um einen Satz Wertegruppen, insbesondere Wertepaare, zu speichern, wobei jede Wertegruppe einen Stromstärkewert für eine bestimmte Stromstärke (Iₘ, Iₘ₊₁, Iₘ₊₂) und einen zugehörigen Wert zumindest einer zu überwachenden Eigenschaft eines Ladens des Akkumulators (201) beschreibt, wobei vorzugsweise der Wert der zu überwachenden Eigenschaft einen Spannungswert für eine bei dieser bestimmten Stromstärke (Iₘ, Iₘ₊₁, Iₘ₊₂) zu erreichende Zellspannung (Uₘ, Uₘ₊₁, Uₘ₊₂) beschreibt und für den Satz gilt, dass der Stromstärkewert mit zunehmendem Spannungswert abnimmt.

13. Ladegerät (200) zum Laden eines Akkumulators (201) für eine mobile Werkzeugmaschine, welcher zumindest eine Zelle (207) mit Ladeschlussspannung von mehr als 4,3 V hat, enthaltend eine Ladeschnittstelle (203) und ein Steuergerät (206), das zum Ausführen des Verfahrens (M10) nach einem der Ansprüche 1-8 eingerichtet ist.

14. Ladegerät (200) nach Anspruch 13, welches dazu eingerichtet ist, den Satz Wertegruppen, insbesondere Wertepaare, durch Auslesen aus einem Speicher (208) des Akkumulators (201) bereitzustellen.

15. Akkumulator-betriebene mobile Werkzeugmaschine (400), enthaltend: a) ein Steuergerät (411) und b) einen Akkumulator (414) und/oder eine Schnittstelle zum Koppeln eines Akkumulators (414), wobei der Akkumulator (414) zumindest eine Zelle (416) mit einer Ladeschlussspannung von mehr als 4,3 V hat, und wobei das Steuergerät (411) zum Ausführen des Verfahrens (M10) nach einem der Ansprüche 1-8 eingerichtet ist.
